# EUROPÄISCHE PATENTSCHRIFT

(11) **EP 0 638 228 B1**
(45) Veröffentlichungstag und Bekanntmachung des Hinweises auf die Patenterteilung: **28.04.1999**
(21) Anmeldenummer: 94111938.0
(22) Anmeldetag: 30.07.1994
(51) Int. Cl.: A01D 34/48

(54) **Lösbare Einrichtung zum Anschliessen eines Fangbehälters an eine Mäheinheit**
Detachable device for connecting a container to a mower
Dispositif détachable pour joindre un conteneur sur une faucheuse

(30) Priorität: 12.08.1993 US 105548
(43) Veröffentlichungstag der Anmeldung: 15.02.1995
(73) Patentinhaber: Deere & Company, Moline, Illinois 61265-8098 (US)
(72) Erfinder: Reichen, Ronald Lee, Horicon, Wisconsin 53032 (US); Swenson, Phillip Orland, Beaver Dam, Wisconsin 53916 (US)
(74) Vertreter: Feldmann, Bernhard

(56) Entgegenhaltungen:
- GB-A- 1 505 399
- US-A- 4 747 258

## Beschreibung

Die Erfindung bezieht sich auf eine lösbare Einrichtung zum Anschließen eines Fangbehälters an eine Mäheiheit, wobei der Fangbehälter von der Mäheinheit abgemähtes Gut auffängt und die Einrichtung mit zwei gegenseitigen seitlichen Abstand aufweisenden und an dem Fangbehälter angeordneten Eingriffsteilen und einer an der Mäheinheit vorgesehenen und sich über deren Breite erstreckenden Traverse versehen ist, die im angeschlossenen Zustand des Fangbehälters die Eingriffsteile aufnimmt.

Für die Rasenpflege größerer Anlagen werden heutzutage immer häufiger selbstfahrende Sitzrasenmäher eingesetzt, bei denen sich bei einer Version, bei der es weniger auf den präzisen Schnitt ankommt, das Mähwerk vor oder hinter oder unter dem Fahrzeug befindet. Das Mähwerk ist bei dieser Version als Sichelmäher ausgebildet, und das geschnittene Gut kann in einen am Sitzrasenmäher angebrachten Sammelbehälter geblasen werden. Derartige Sammelbehälter lassen sich in der Regel problemlos entleeren und müssen zum Entleeren auch nicht vom Fahrzeug abgenommen werden.

Kommt es jedoch auf einen präzisen Rasenschnitt an, was bei Sportanlagen, insbesondere bei Golfplätzen der Fall ist, so werden Spindelmäher bevorzugt. Bei den Spindelmähern laufen die Spindeln um horizontale Achsen um, weshalb jede Spindelmäheinheit eine relativ kleine Arbeitsbreite hat. Es werden deshalb zur Erzielung wirtschaftlicher Arbeitsbreiten mehrere Spindelmäheinheiten nebeneinander geschaltet. So ist es beispielweise möglich, wenigstens drei Spindelmäheinheiten vorzusehen, wobei sich dann die mittlere unterhalb des Fahrzeuges zwischen dessen vorderen und rückwärtigen Laufrädern befindet, während die beiden seitlichen Spindelmäheinheiten vor den vorderen Laufrädern vor dem Fahrzeug arbeiten. Muß das geschnittene Gut gesammelt werden, so ist jeder Spindelmäheinheit ein Grasfangbehälter zuzuordnen. Solche Grasfangbehälter haben ein relativ kleines Fassungsvermögen und müssen deshalb häufig entleert werden. Das Abnehmen und Neuanschließen der vorderen Grasfangbehälter ist in der Regel problemlos. Anders verhält es sich aber mit dem sich unterhalb des Fahrzeuges befindlichen Grasfangbehälter, da dieser schwer zugänglich ist.

Bei der Einrichtung, von der die Erfindung ausgeht (Prospekt: Jakobsen - The Royal Family of Greens King IV Triplex Greensmowers - Professional Turf Equipment; Druckvermerk L62221-0886-4) ist die Traverse als rohrförmiges Querglied ausgebildet, das die Seitenrahmenteile der Mäheiheit miteinander zu einem festen Gestell verbindet und das in seiner Mitte eine nach vorne ragende Kupplungsstange aufweist, die zum Anschließen der Mäheinheit an einen Sitzrasenmäher dient. Dieser kann an seiner Frontseite zwei Mäheinheiten und zwischen seinen Vorderrädern und einem einzigen rückwärtigen Laufrad eine dritte ebenfalls als Spindelmäher ausgebildete Mäheinheit aufnehmen. Alle Mäheinheiten sind höhenverstellbar, wozu ein Hakenteil die Traverse zusätzlich übergreift, damit die Mäheinheiten bei einem Höhenverstellen nicht nach unten verkippen. Die Eingriffsteile sind als Haken mit nach unten hin offenen Hakenausnehmungen ausgebildet, die bei einem vertikalen Ansetzen und Abnehmen des Fangbehälters leicht verbiegen, was insbesondere für den Fangbehälter, für die dritte unter dem Rumpf vorgesehene Mäheinheit zutrifft. Eine störunanfällige Befestigung ist damit nicht gewährleistet. Um dieses Problem zu beheben, ist für diese Einrichtung bereits vorgeschlagen worden (US-A-4 747 258) die Hakenspitzen zu entfernen und die verbleibenden Hakenteile über eine verdrehbare Verriegelungsstange mit der Traverse zu verspannen. Hierdurch ist eine Schnellver- bzw. -entriegelung geschaffen, die aber nach wie vor ein vertikales Abnehmen oder Ansetzen des Fangbehälters erfordert, was selbstverständlich zumindest für den Fangbehälter unter dem Fahrzeugrumpf beschwerlich ist.

Bei einer anderen bekannten Einrichtung (Instruktionsblatt für Grasfangbehälterzubehör - Produkt Nr. 69091 für HF - 5 Schlepper, eine Publikation der Jakobson Division der Textron Inc. aus dem Jahre 1985) kann der Grasfangbehälter für die sich unterhalb des Fahrzeuges befindliche Spindelmäheinheit bereits von einer Fahrzeugseite aus, und zwar der rechten, an die Spindelmäheinheit angeschlossen werden. Der Grasfangbehälter ist hierzu an seiner linken Seite mit einem Langloch versehen und wird zum Anschließen an der rechten Fahrzeugseite mit seiner linken Seite auf die Schiene aufgesetzt und auf dieser nach links verschoben, bis ein an der Spindelmäheinheit vorgesehener Dorn in das Langloch eingreifen kann. An der rechten Seite der Spindelmäheinheit befindet sich noch ein federbelasteter Stekker, der gezogen wird, wenn der Dorn schließlich in das Langloch eingetreten ist. Der Stecker muß dann noch in eine entsprechende Öffnung in dem Grasfangbehälter eintreten. Der Grasfangbehälter wird dann durch den Dorn, den Stecker und die Schiene gehalten, wobei noch das der Schiene abgelegene Ende des Grasfangbehälters über eine Kette an das Fahrzeug anzuschließen ist. Zum Anschließen muß der Grasfangbehälter mit beiden Händen geführt werden und es muß sichergestellt sein, daß der Dorn in das Langloch eintritt. Gegebenenfalls muß sich dabei eine Bedienungsperson auf dem Boden knien, um den Dorn überhaupt finden zu können. Beim Ziehen des Steckers muß der Grasfangbehälter noch mit einer Hand gehalten und geführt werden, damit er nicht von der Schiene fällt. Der Abnahmevorgang verläuft umgekehrt, und es ist dabei nicht auszuschließen, daß der gefüllte Grasfangbehälter von der Schiene abrutscht und sich entleert.

Die mit der Erfindung zu lösende Aufgabe wird darin gesehen, einen Fangbehälter in einfacher und für die Bedienungsperson in nicht beschwerlicher Art an eine Mäheinheit anzuschließen und in ebensolcher Art wieder abnehmen zu können. Die Erfindung sieht deshalb vor, daß die Traverse als durchgehende Schiene ausgebildet und in ihren Endbereichen mit je einem Anschlag versehen ist, wobei wenigstens einer der Eingriffsteile über die gesamte Länge der Schiene zwischen deren Anschlägen verschiebbar ist, wenn der andere Eingriffsteil von der Schiene zwischen deren Anschlägen gelöst wurde. Diese Lösung läßt sich besonders vorteilhaft dort nutzen, wo die Mäheinheit an einer schwer zugänglichen Stelle an einem Fahrzeug angebracht ist, was der Fall ist, wenn die Mäheinheit unter einem Fahrzeug und zwischen seinen vorderen und rückwärtigen Laufrädern aufgehängt ist. In einem solchen Fall braucht sich die Bedienungsperson lediglich auf eine Fahrzeugseite zu begeben und löst zum Abnehmen des Fangbehälters einen Eingriffsteil, der ein federbelasteter Verriegelungsstift sein kann, und zieht dann den Fangbehälter mit einer Hand auf seine Seite, wobei der andere Eingriffsteil auf der Schiene gleitet und den Fangbehälter führt. Sobald der zweite Eingriffsteil in Reichweite der Bedienungsperson ist, kann seine Verbindung mit der Schiene leicht gelöst werden. Die Bedienungsperson braucht sich im Höchstfall bei diesem Vorgang nur zu bücken und kann den gefüllten Fangbehälter nach Lösen des zweiten Eingriffsteils leicht erfassen und anheben. Während des Verschiebens oder zu sich Hinziehen des Fangbehälters ist ein ungewolltes Entleeren desselben nicht zu befürchten. Der Wiederanbau des leeren Fangbehälters erfolgt in entsprechender unproblematischer Art.

Um die lösbare Einrichtung besonders einfach und damit auch kostengünstig zu gestalten, sind beide Eingriffsteile an dem Fangbehälter vorgesehen und übergreifen bei an die Mäheinheit angeschlossenem Fangbehälter die Schiene, wozu die Schiene im Querschnitt rund ausgebildet ist und die Eingriffsteile als Haken ausgebildet sind. Zum Abbau braucht damit die Bedienungsperson nur den ihr zugelegenen Haken von der Schiene abzunehmen, wonach sie den Fangbehälter auf sich zu ziehen kann, wobei der zweite Haken auf der Schiene gleitet. Sobald der zweite Haken in Reichweite der Bedienungsperson ist, kann sie den zweiten Haken und damit den Fangbehälter abnehmen und zum Entleeren forttragen. Der Wiederanbau erfolgt in umgekehrter Weise. Das Abnehmen und Wiedereinsetzen des Fangbehälters kann von jeder Fahrzeugseite aus erfolgen.

Damit der Fangbehälter leicht eingehängt werden kann, sieht die Erfindung ferner vor, daß die Schiene sich oberhalb der als Spindelmäher ausgebildeten Mäheinheit und mit Bezug auf die Arbeitsrichtung vor oder rückwärtig der Mäheinheit befindet. Hierdurch ist es außerdem möglich, daß der Fangbehälter eine Stellung einnehmen kann, die vor oder hinter dem Spindelmäher liegt. Zweckmäßig ist die Schiene der Steg eines U-förmigen Bügels, dessen Schenkel mit den Seitenrahmen der Mäheinheit verbindbar sind. Damit ist die lösbare Einrichtung auch einsetzbar, wenn sich die Spindelmäher beispielweise vor dem Fahrzeug befinden, also an Stellen, die im Prinzip leicht zugänglich sind. In solchen Fällen können die Fangbehälter einfach nach oben abgehoben werden. Die U-Form ermöglicht auch eine einfache Anbringung, da Spindelmäher in der Regel mit höheneinstellbaren und im Einsatz auf dem Boden abrollenden Walzen versehen sind. Zwischen den Stellvorrichtungen für die Walzen und dem Spindelgehäuse lassen sich dann leicht Aufnahmen für die Schenkel der Schiene unterbringen.

Schließlich wird nach der Erfindung noch vorgeschlagen, daß die Eingriffsteile einen Querabstand aufweisen, der dem Innenabstand der Anschläge entspricht. Diese Maßnahme erleichtert den Anbau des Fangbehälters weiter, da der Fangbehälter sich nur soweit verschieben läßt, bis er gegen den entsprechenden Anschlag stößt. Danach wird der zweite Haken innen neben dem zweiten Anschlag auf die Schiene gesetzt und der Fangbehälter ist gegen Verschieben gesichert.

Wenn die als Haken ausgebildeten Eingriffsteile an einer oberen Stirnseite des Fangbehälters vorgesehen sind, kippt der Fangbehälter nach dem Einhaken infolge seines Eigengewichtes gegen das Gehäuse des Spindelmähers. Eine weitere Arretierung ist grundsätzlich nicht erforderlich.

In der Zeichnung ist ein nachfolgend näher erläutertes Ausführungsbeispiel der Erfindung dargestellt. Es zeigt:
- Fig. 1: einen Sitzrasenmäher mit frontseitig und mittig angeordneten Spindelmähern, die das geschnittene Gut in zugeordnete Grasfangbehälter fördern,
- Fig. 2: einen vor dem Fahrzeug angeordneten Spindelmäher mit Grasfangbehälter,
- Fig. 3: einen zwischen den Laufrädern des Fahrzeuges angeordneten Spindelmäher mit Grasfangbehälter,
- Fig. 4: den Anschluß einer Tragschiene an den Spindelmäher und

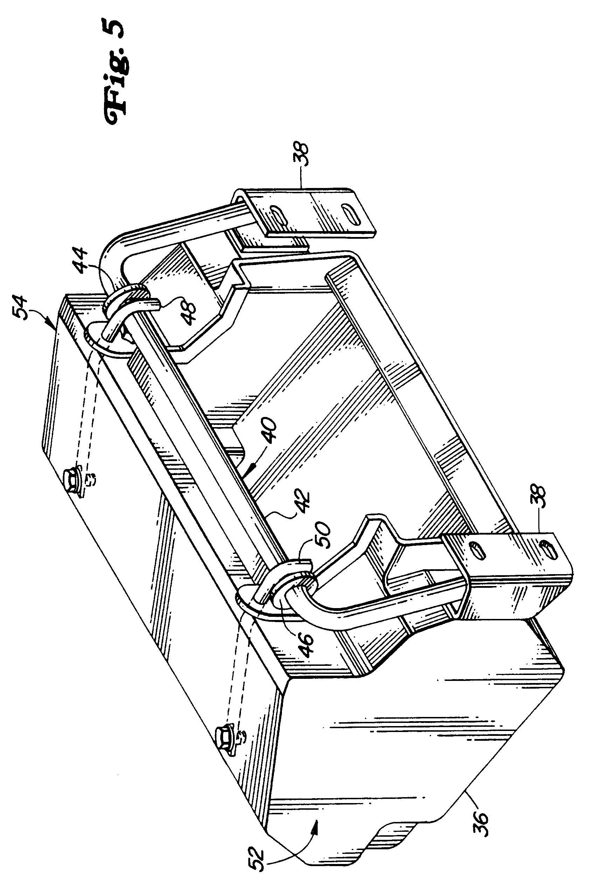

- Fig. 5: die Einrichtung zum lösbaren Anschließen des Grasfangbehälters an den Spindelmäher in perspektivischer Darstellung.

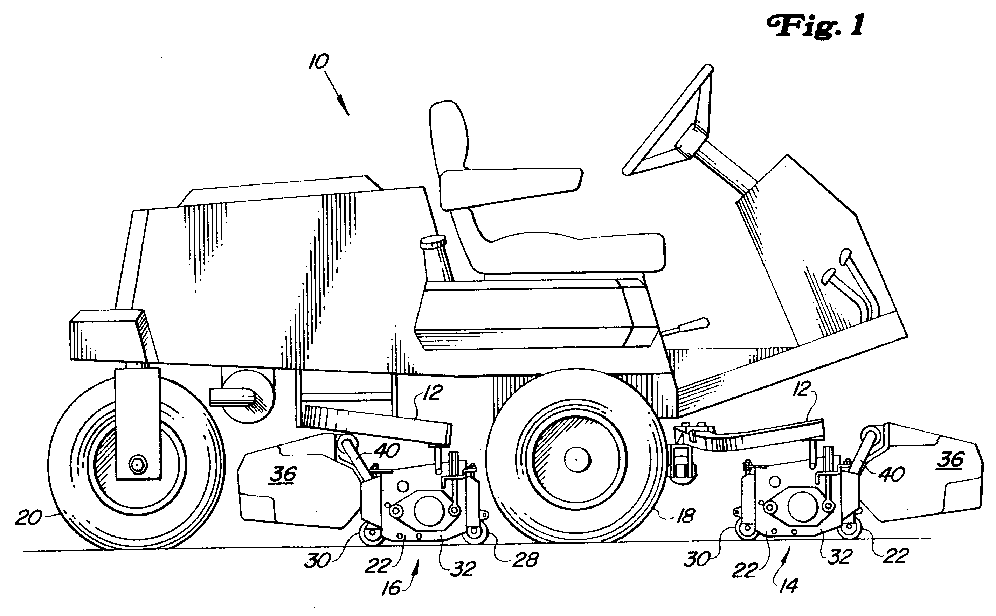

In Fig. 1 der Zeichnung ist ein insbesondere für die Rasenpflege auf Golfplätzen einsetzbares Fahrzeug 10 in Form eines Spindelmäher aufweisenden Sitzrasenmähers dargestellt, und später benutzte Begriffe, wie links und rechts, beziehen sich auf die Blickrichtung einer sich auf dem Fahrersitz befindlichen Bedienungsperson. Wie ferner aus Fig. 1 erkennbar ist, ist das selbstfahrende Fahrzeug 10 mit Lenkern 12 ausgerüstet, an die Spindelmäheinheiten 14 und 16 angeschlossen sind, und zwar ein aus mindestens zwei Spindelmäheinheiten 14 bestehender Satz derart, daß sie vor dem Fahrzeug hergeschoben werden, und wenigstens eine weitere Spindelmäheinheit 16 zwischen vorderen Laufrädern 18 und wenigstens einem rückwärtigen Laufrad 20 unterhalb des Fahrzeuges 10.

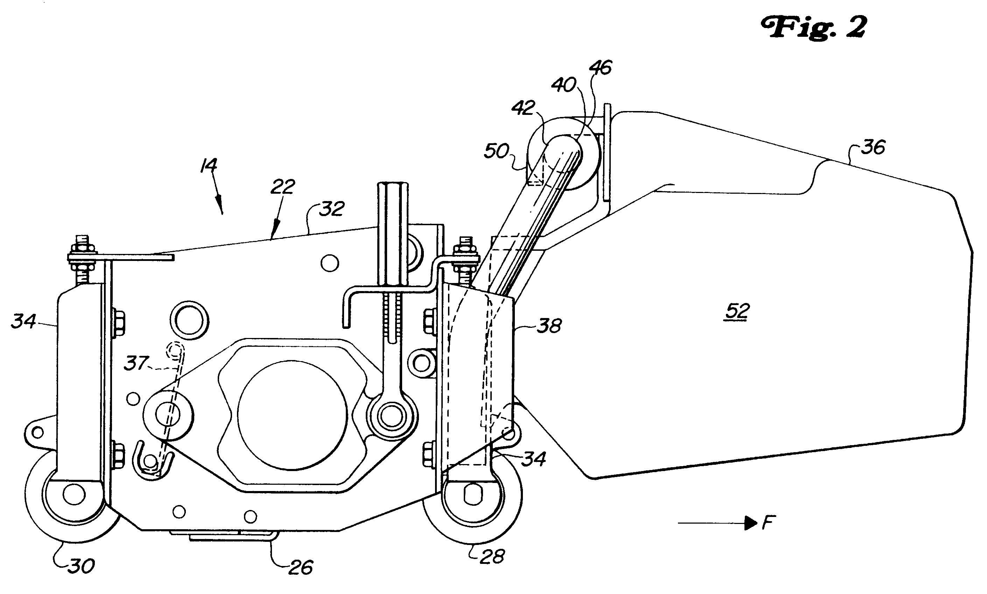

Fig. 2 gibt eine vor dem Fahrzeug 10 hergeschobene Spindelmäheinheit 14 wieder. Man erkennt einen Rahmen 22, an den eine in der Zeichnung nicht dargestellte Schneidspindel angeschlossen ist, die um eine horizontale und sich quer erstreckende Achse umläuft. Mit Hilfe eines Untermessers 26 wird von der Schneidspindel das Gras geschnitten. Die Schnitthöhe wird durch vordere und rückwärtige auf dem Boden ablaufende Walzen 28 und 30 oder Rollen bestimmt, die an Seitenrahmen 32 über vertikal einstellbare Stellvorrichtungen 34 angreifen.

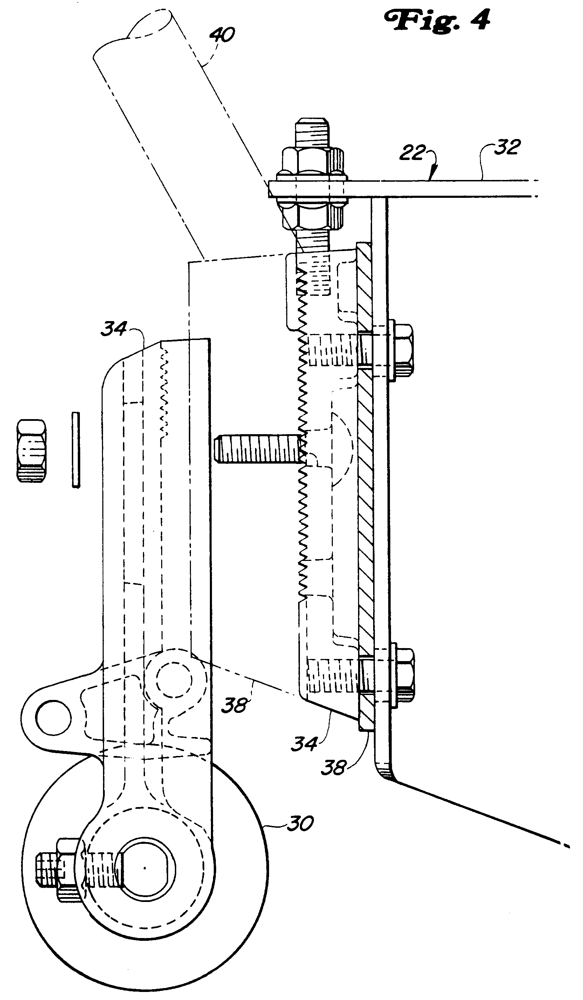

Die Spindelmäheinheiten können das geschnittene Gut unmittelbar auf den Boden ablegen, was aber nicht immer erwünscht ist, weshalb beim bevorzugten Ausführungsbeispiel jeder Spindelmäheinheit ein Grasfangbehälter 36 zugeordnet ist, der das geschnittene Gut auffängt, aber wegen seines begrenzten Fassungsvermögens öfters entleert werden muß. Die Grasfangbehälter können aus Kunststoff in Korbform hergestellt sein, und bei der Ausführungsform nach Fig. 2 befinden sie sich unmittelbar vorne vor den Spindelmäheinheiten 14. Von den Mähspindeln geschnittenes Gut wird nach rückwärts im Uhrzeigerdrehsinn gegen eine Platte 37 geworfen, die das Schnittgut nach vorne in den Grasfangbehälter 36 lenkt. Jeder Grasfangbehälter 36 ist an den Spindelmäheinheiten schnell und leicht an- und abbaubar angeschlossen. Zum schnellen An- und Abbau sind an die entsprechenden Seiten einer jeden Spindelmäheinheit 14 zwischen den Stellvorrichtungen 34 für die Walzen und den Seitenrahmen 32 der Mähspindeleinheiten 14, wie es am besten aus Fig. 4 erkennbar ist, je ein vertikal gerichteter U-Bügel 38 angeschlossen, beispielsweise angeschraubt. Mit diesen sind die Endteile eines sich über die Breite einer jeden Spindelmäheinheit ersteckenden und U-förmig gebogenen Rohres 40 verschweißt, dessen als Tragschiene dienender Mittelteil 42 oder Steg einen runden oder im wesentlichen runden Querschnitt aufweist. An den beiden Enden des Mittelteils 42 unmittelbar vor den Übergang in die seitlichen Schenkel sind Anschläge 44 und 46 vorgesehen, beispielsweise aufgeschweißt. Der Grasfangbehälter 36 wird an den Mittelteil 42 aufgehängt, wozu jeder Grasfangbehälter 36 mit zwei Eingriffsteilen bzw. Greifelementen oder Haken 48 und 50 versehen ist, die dem Mittelteil 42 übergreifen und einen gegenseitigen Abstand aufweisen, der dem Innenabstand der Anschläge 44, 46 entspricht. Was die vorderen Grasfangbehälter 36 anbelangt, so können sie zum Entleeren nach oben von dem Mittelteil 42 des Rohres 40 abgezogen werden. Nach dem Entleeren können die beiden Haken gleichzeitig zum Wiederanbau des Grasfangbehälters auf den Mittelteil wieder aufgesetzt werden.

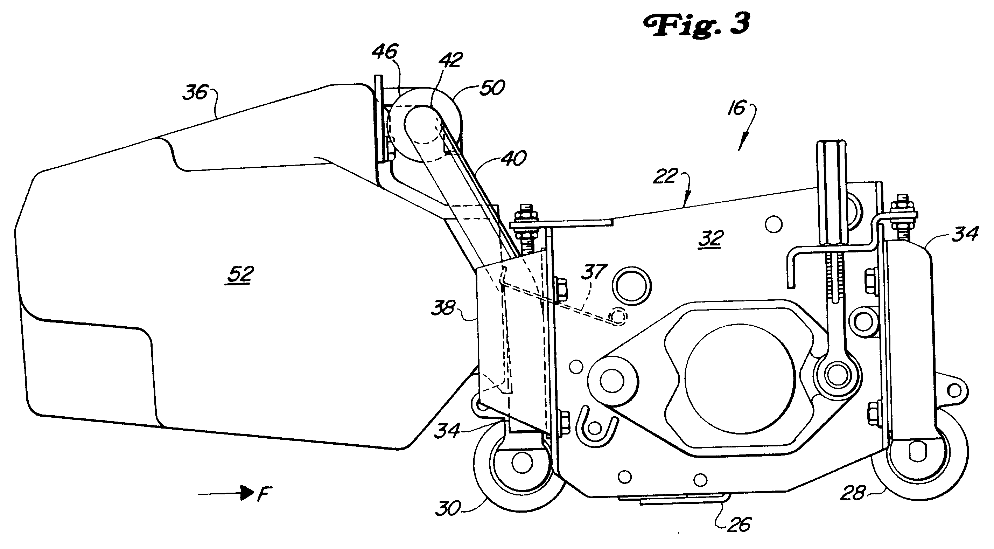

Fig. 3 zeigt die zwischen den Laufrädern 18 und 20 und unterhalb des Fahrzeuges 10 angeordnete Spindelmäheinheit 16 mit zugehörigem Grasfangbehälter 36, der in diesem Fall rückwärtig der Spindelmäheinheit 16 aufgehängt ist und Schnittgut auffängt, das von der Spindel nach rückwärts geworfen wird. Anders als bei den frontseitig vorgesehenen Spindelmäheinheiten 14 ist die Platte 37 nun nach oben in eine obere Position verschwenkt, damit sie den Förderweg des Schnittgutes nach rückwärts in den Grasfangbehälter 36 nicht behindert. Der Grasfangbehälter 36 und seine Aufhängeeinrichtung entsprechen dem Grasfangbehälter 36 und der Aufhängeeinrichtung nach Fig. 2. Die U-Bügel 38 sind allerdings an die rückwärtigen Enden der Seitenrahmen 32 angeschlossen, und zwar zwischen den Seitenrahmen 32 und den Stellvorrichtungen 34 für die Walzen 30. Dabei können die Schrauben für die Anbringung der Stellvorrichtung auch als Befestigungsmittel für die U-Bügel 38 dienen. Die Schenkel des Rohres sind bei der Zwischenachsanbringung schräg nach oben und nach rückwärts gerichtet und der runde Steg 42 des Rohres 40 kommt oberhalb und rückwärtig der Spindelmäheinheit 16 zu liegen. Der zugehörige Grasfangbehälter ist mit seinen Haken 48 an den Steg 42 des Rohres 40 gehängt, wobei die Anordnung derart gestaltet ist, daß der Grasfangbehälter 36 entgegen dem Uhrzeigerdrehsinn drehen will und mit seiner Vorderseite gegen die U-Bügel 38 zur Anlage kommt. Bei der Anordnung nach Fig. 2 will der Grasfangbehälter 36 im Uhrzeigerdrehsinn infolge seiner Schwerpunktslage drehen. In den Fig. 2 und 3 ist die Fahrtrichtung bzw. Arbeitsrichtung mit dem Buchstaben F bezeichnet, und die Teile für die frontseitige Anordnung nach Fig. 2 und für die rückseitige Anordnung nach Fig. 3 des Grasfangbehälters 36 sind identisch. Es werden damit keine unterschiedliche Teile benötigt, so daß die Herstellungskosten entsprechend verringert sind.

Es wurde vorstehend bereits darauf hingewiesen, wie die frontseitigen Grasfangbehälter 36 angeschlossen und abgenommen werden können. Die besondere Aufhängung macht es aber auch möglich, daß der sich unterhalb des Fahrzeuges 10 zwischen seinen Laufrädern befindliche Grasfangbehälter 36 in einfacher Weise an- und abgebaut werden kann. Ist beispielweise der sich unterhalb des Fahrzeuges befindliche rückwärtige Grasfangbehälter 36 mit Schnittgut gefüllt, so kann er von einer Fahrzeugseite aus leicht abgenommen werden. Die Bedienungsperson kann hierzu auf die rechte Fahrzeugseite gehen, sich bücken, die ihr zugelegene Seite, und zwar die rechte Seite 52 des Grasfangbehälters 36 erfassen, den Grasfangbehälter etwas im Uhrzeigerdrehsinn verschwenken und dabei den rechten Haken 50 von dem Steg 42 des Rohres 40 abheben, wobei jedoch der linke Haken 48 an der linken Seite des Grasfangbehälters 36 an seinem Platz auf dem Steg 42 neben dem Anschlag 40 noch verbleibt. Nachfolgend zieht die Bedienungsperson den Grasfangbehälter 36 nach rechts oder auf sich zu, wobei sich der linke Haken 48 auf dem Steg 42 des Rohres 40 verschiebt, bis daß er gegen den rechten Anschlag 46 zur Anlage kommt. In einer solchen Stellung kann die Bedienungsperson dann auch den linken Haken 48 oder die linke Seite 54 des Grasfangbehälters 36 leicht erfassen und von dem Rohr 40 abheben. Es ist also nicht erforderlich, daß die Bedienungsperson sich auf die andere Fahrzeugseite begibt. Sie kann den Grasfangbehälter 36 von einer Fahrzeugseite in im wesentlichen zwei Schritten abnehmen, und zwar an einer Stelle, an der sie bequem stehen und sich bücken kann, ohne Gefahr zu laufen, sich an Fahrzeugaufbauten zu stoßen oder unter solche greifen zu müssen. Jede Seite wird gesondert abgehoben, so daß auch weniger kräftige Personen den gefüllten Grasfangbehälter ohne großen Kraftaufwand und Verrenkungen leicht abnehmen können.

Nach dem Entleeren muß der Grasfangbehälter 36 wieder an seinem Platz unterhalb des Fahrzeuges und hinter der Spindelmäheinheit verbracht werden, um mit dem Mähen fortfahren zu können. Auch dies kann in besonders einfacher Weise erfolgen. Die sich auf der rechten Fahrzeugseite befindliche Bedienungsperson braucht dazu den linken Haken 48 lediglich links neben dem rechten Anschlag 46 auf den Steg 42 zu heben, den leeren Grasfangbehälter 36 nach links zu drücken, wobei sich der linke Haken 48 auf dem Steg 42 verschiebt, bis daß er gegen die rechte Seite des linken Anschlages 44 stößt. Danach braucht nur noch der rechte Haken 50 auf den Steg 42 des Rohres 40 gehängt zu werden, und der Grasfangbehälter 36 kippt in seine Betriebsstellung, in der er gegen die U-Bügel anliegt. In der Betriebsstellung befindet sich der rechte Haken 50 links neben dem rechten Anschlag 46 und sobald der linke Haken 48 gegen den linken Anschlag 44 stößt, kann der rechte Haken an keiner anderen Stelle mehr eingreifen. Damit kann auch das Einsetzen des leeren Grasfangbehälters von einer leicht zugänglichen Seite des Fahrzeuges ohne Mühe erfolgen.

Die Bedienugsperson muß sich lediglich bücken.

Selbstverständlich kann der Grasfangbehälter 36 nach Fig. 3 in entsprechender einfacher Weise auch von der linken Fahrzeugseite aus abgenommen und wieder eingesetzt werden. In jedem Fall sind die Anschläge 44 und 46 an dem Rohr 40 möglichst weit nach außen zu setzen, damit die Bedienungsperson nicht oder nur unwesentlich unter das Fahrzeug greifen muß. Es versteht sich, daß die vorderen Grasfangbehälter 36 nach Fig. 2 in entsprechender Art an- und abgebaut werden können.

## Patentansprüche

1. Lösbare Einrichtung zum Anschließen eines Fangbehälters (36) an eine Mäheinheit (14, 16), wobei der Fangbehälter (36) von der Mäheinheit (14, 16) abgemähtes Gut auffängt und die Einrichtung mit zwei gegenseitigen seitlichen Abstand aufweisenden und an dem Fangbehälter (36) angeordneten Eingriffsteilen und einer an der Mäheinheit (14, 16) vorgesehenen und sich über deren Breite erstreckenden Traverse versehen ist, die im angeschlossenen Zustand des Fangbehälters (36) die Eingriffsteile aufnimmt, dadurch gekennzeichnet, daß die Traverse als durchgehende Schiene ausgebildet und in ihren Endbereichen mit je einem Anschlag (44, 46) versehen ist, wobei wenigstens einer der Eingriffsteile über die gesamte Länge der Schiene zwischen deren Anschlägen (44, 46) verschiebbar ist, wenn der andere Eingriffsteil von der Schiene zwischen deren Anschlägen (44, 46) gelöst wurde.

2. Einrichtung nach Anspruch 1, dadurch gekennzeichnet, daß beide Eingriffsteile an dem Fangbehälter (36) vorgesehen sind und bei an die Mäheinheit (14, 16) angeschlossenem Fangbehälter (36) die Schiene übergreifen.

3. Einrichtung nach Anspruch 1 oder 2, dadurch gekennzeichnet, daß die Schiene im Querschnitt rund ausgebildet ist und daß die Eingriffsteile als Haken (48, 50) ausgebildet sind.

4. Einrichtung nach einem oder mehreren der vorherigen Ansprüche, wobei die Mäheinheit (14, 16) als Spindelmäher ausgebildet ist, dadurch gekennzeichnet, daß die Schiene sich oberhalb der Mäheinheit (14, 16) und mit Bezug auf die Arbeitsrichtung vor oder rückwärtig der Mäheinheit (14, 16) befindet.

5. Einrichtung nach einem oder mehreren der vorherigen Ansprüche, dadurch gekennzeichnet, daß die Schiene der Steg (42) eines U-förmigen Bügels (40) ist, dessen Schenkel mit den Seitenrahmen (32) der Mäheinheit (14, 16) verbindbar sind.

6. Einrichtung nach Anspruch 1, dadurch gekennzeichnet, daß die Eingriffsteile einen Querabstand aufweisen, der dem Innenabstand der Anschläge (44, 46) entspricht.

7. Einrichtung nach einem oder mehreren der vorherigen Ansprüche, dadurch gekennzeichnet, daß die als Haken (48, 50) ausgebildeten Eingriffsteile an einer oberen Stirnseite des Fangbehälters (36) vorgesehen sind.

## Claims

1. A releasable device for attaching a collecting container (36) to a mower unit (14, 16), wherein the collecting container (36) collects mowed material from the mower unit (14, 16) and the device is provided with two engagement parts laterally spaced from one another arranged on the collecting container (36) and a transverse bar provided on the mower unit (14, 16) and extending over the width thereof, which bar receives the engagements parts in the attached state of the collecting container (36), characterized in that the transverse bar is in the form of a continuous rail and is provided at each end region with a stop (44, 46), wherein at least one of the engagement parts can slide over the whole length of the rail between its stops (44, 46) when the other engagement part is released from the rail between its stops (44, 46).

2. A device according to claim 1, characterized in that both engagement parts are provided on the collecting container (36) and engage over the rail with the collecting container (36) attached to the mower unit (14, 16).

3. A device according to claim 1 or 2, characterized in that the rail is of round form in cross-section and in that the engagement parts are in the form of hooks (48, 50).

4. A device according to one or more of the preceding claims, wherein the mower unit (14, 16) is in the form of a cylinder mower, characterized in that the rail is located above the mower unit (14, 16) and to the front or rear of the mower unit (14, 16) in relation to the working direction.

5. A device according to one or more of the preceding claims, characterized in that the rail is the web (42) of a U-shaped frame (40, whose arms can be attached to the side frames (32) of the mower unit (14, 16).

6. A device according to claim 1, characterized in that the engagement parts have a transverse spacing which corresponds to the inside spacing of the stops (44, 46).

7. A device according to one or more of the preceding claims, characterized in that the engagement parts in the form of hooks (48, 50) are provided at an upper front side of the collecting container (36).

## Revendications

1. Dispositif amovible pour raccorder un récipient de collecte (36) à une unité de coupe (14, 16), le récipient de collecte (36) collectant la matière coupée par l'unité de coupe (14, 16), et le dispositif étant équipé de deux organes d'accrochage opposés séparés par une distance latérale et disposés sur le récipient de collecte (36), et une traverse, qui est prévue sur l'unité de coupe (14, 16) et s'étend sur la largeur de cette unité et qui reçoit les organes d'accrochage lorsque le récipient de collecte (36) est à l'état raccordé, caractérisé en ce que la traverse est agencée sous la forme d'une barre continue et est pourvue, au niveau de ses parties d'extrémité, de butées respectives (44, 46), au moins l'un des organes d'accrochage étant déplaçable sur toute la longueur de la barre entre des butées (44, 46) de cette dernière, lorsque l'autre partie d'engrènement a été dégagée de la barre entre les butées (44, 46) de cette dernière.

2. Dispositif selon la revendication 1, caractérisé en ce que les deux parties d'accrochage sont prévues sur le récipient de collecte (36) et s'engagent par-dessus la barre dans le cas où le récipient de collecte (36) est raccordé à l'unité de coupe (14, 16).

3. Dispositif selon la revendication 1 ou 2, caractérisé en ce que le rail possède une forme circulaire en coupe transversale et que les éléments d'accrochage sont agencés sous la forme de crochets (48, 50).

4. Dispositif selon une ou plusieurs des revendications précédentes, dans lequel l'unité de coupe (14, 16) est agencée sous la forme d'une tondeuse entraînée par rouleau, caractérisé en ce que la barre est disposée au-dessus d'une unité de coupe (14, 16) et en avant ou en arrière de l'unité de coupe (14, 16) dans la direction de travail.

5. Dispositif selon une ou plusieurs des revendications précédentes, caractérisé en ce que la barre est la barrette (42) d'un étrier en forme de U (40), dont les branches peuvent être reliées aux cadres latéraux (32) de l'unité de coupe (14, 16).

6. Dispositif selon la revendication 1, caractérisé en ce que les organes d'accrochage sont séparés par une distance transversale, qui correspond à la distance intérieure entre les butées (44, 46).

7. Dispositif selon une ou plusieurs des revendications précédentes, caractérisé en ce que les organes d'accrochage réalisés sous la forme de crochets (48, 50) sont prévus sur une face frontale supérieure du récipient de collecte (36).
